Europäisches Patentamt

European Patent Office

Office européen des brevets

(11) Veröffentlichungsnummer: **0 118 025 B1**

(12) **EUROPÄISCHE PATENTSCHRIFT**

(45) Veröffentlichungstag der Patentschrift:
11.06.86

(21) Anmeldenummer: 84101012.7

(22) Anmeldetag: 01.02.84

(51) Int. Cl.⁴: **H 02 G 11/02, B 64 F 1/305**

(54) Kabelanschluss zu einer zentralen Bordnetzversorgungsanlage auf Flughäfen.

(30) Priorität: 08.02.83 DE 3304276

(43) Veröffentlichungstag der Anmeldung:
12.09.84 Patentblatt 84/37

(45) Bekanntmachung des Hinweises auf die Patenterteilung:
11.06.86 Patentblatt 86/24

(84) Benannte Vertragsstaaten:
AT BE CH FR GB IT LI LU NL SE

(56) Entgegenhaltungen:
DE - A - 3 128 545
DE - U - 8 303 469
FR - A - 1 458 356
US - A - 3 773 987

(73) Patentinhaber: Schabmüller, Heinz, Midgardstrasse 20,
D-8132 Tutzing (DE)

(72) Erfinder: Schabmüller, Heinz, Midgardstrasse 20,
D-8132 Tutzing (DE)

(74) Vertreter: Grättinger, Günter,
Wittelsbacherstrasse 5 Postfach 16 49, D-8130 Starnberg
(DE)

LIBER, STOCKHOLM 1986

## Beschreibung

Die Erfindung bezieht sich auf eine Verstauvorrichtung für das Anschlußkabel einer zentralen Bordnetzversorgungsanlage auf Flughäfen. Derartige Verstauvorrichtungen sind für die neuerdings auf Flughäfen eingeführten zentralen Bordversorgungsanlagen erforderlich, die anstelle der früher benutzten Dieselaggregate oder der bordeigenen Generatoren aus Wirtschaftlichkeitsgrunden und aus Gründen des Lärmschutzes mehr und mehr Verbreitung finden.

Die hierzu erforderlichen Versorgungskabel haben beispielsweise einen Durchmesser von 46 mm und enthalten außer vier Kabeladern für die 400-Hz Drehstromversorgung noch 20 bis 30 Steuerleitungen. Sie sind daher schwer und lassen sich nur schwierig verstauen, und zwar insbesondere deshalb, geil die Forderung gestellt ist, daß diese Versorgungskabel bis zum Steckanschluß am Flugzeug ohne Schleifringanordnungen oder Zwischenstecker geführt sein müssen.

Um einen Anschluß an alle heute im Verkehr befindlichen Flugzeugtypen erreichen zu können, ist eine Nutzlänge für das Anschlußkabel von etwa 18 m erforderlich und es ist die Forderung gegeben, diese Kabellänge in der Nähe des Brückenkopfes des Gates bei Nichtgebrauch geschützt unterzubringen und schnell und bequem auf die jeweils benötigte Länge ausfahren zu können.

Es ist bekannt, zum Verstauen des Kabels den auszufahrenden Abschnitt des Versorgungskabels über mehrere lose und feste Rollen zu führen, die bei Bedarf angehoben bzw. abgelassen gerden, um die auszufahrende Kabellänge in Horizontalrichtung verändern zu können. Diese Verstauvorrichtungen erfordern eine große Bauhöhe.

Der Erfindung liegt daher die Aufgabe zugrunde, einen Kabelanschluss zu einer zentralen Bordnetzversorgungsanlage zu schaffen, die die benötigte freie Kabellänge zur Verfügung stellt und ein schnelles und bequemes Ein- und Ausfahren gewährleistet.

Die Aufgabe wird durch einen Kabelanschluss gemäss Anspruch 1 gelöst

Durch die Erfindung wird erreicht, daß ohne Verdrillung des Kabels an irgend einer Stelle die zum Auf- und Abwickeln erforderlichen Trommeldrenungen lediglich durch Veränderung des Krümmungsdurchmessers der Windungen des Ausgleichs kabelabschnitts aufgenommen gerden. Senkrecht zu seiner Längsachse ist ein solches Kabel jedoch von Natur aus bis zu einem bestimmten Krümmungsradius flexibel, so daß auch bei längerem Gebrauch keine Beschädigungen des Kabels zu befürchten sind. Die maximalen und minimalen Durchmesser der sich ergebenden Spiralgindungen müssen dabei je nach dem zur Verwendung kommenden Kabel abgestimmt werden.

Es sind zwar aus der DE-A-31 28 545, der DE-U-78 11 922 und der US-A-18 68 409 schleifringlose Kabeltrommeln mit Festanschluß bekannt, bei denen ein Ausgleichskabelabschnitt spiralförmig aufspreizbar und zusammenziehbar ist, jedoch sind diese Trommeln nur für relativ dünne flexible Schnüre, z.B. Meßschnüre oder 220V-Netz-kabel geeignet, die entgegen der Kraft einer Rückholfeder ausrichtbar sind. Für die schweren Anschlußkabel von Bordnetzversorgungsanlagen sind diese Trommeln auch bei entsprechender Dimensionierung nicht geeignet.

Nachstehend wird ein Ausführungsbeispiel der Erfindung anhand der Zeichnung beschrieben. In der Zeichnung zeigen

Figur 1 eine Ansicht des Brückenkopfes eines Gates mit der erfindungsgemäßen Kabelverstauvorrichtung

Figur 2 eine schematische axiale Ansicht der Kabelverstauvorrichtung gemäß Figur 1 bei aufgerolltem Anschlußkabel

Figur 3 eine der Figur 2 entsprechende schematische Ansicht bei abgewickeltem Anschlußkabel, und

Figur 4 in größeren Maßstab eine Schnittansicht der Kabelverstauvorrichtung

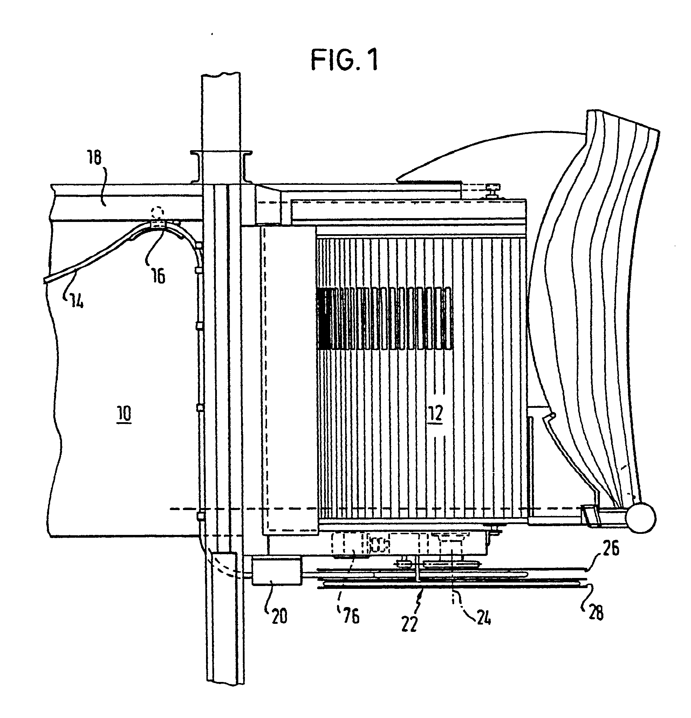

Figur 1 zeigt ein Gate 10 mit Brückenkopf 12, gie sie auf Flughäfen zum Ein- und Ausstieg der Passagiere Anwendung finden. Das Gate 10 ist mit dem Brückenkopf 12 ausfahrbar und in der Höhe verstellbar, um den Brückenkopf an die geöffnete Luke des Flugzeuges heranfahren zu können. je nach Flugzeugtyp sind dabei beträchtliche Höhendifferenzen zu überwinden. Zgischen Landung und Start benötigen die am Boden befindlichen Flugzeuge zur Versorgung einen elektrischen Anschluß, der je nach Flugzeugtype für eine Leistung von etwa 70 bis 100 kVA ausgelegt sein muß. Diese Leistung gird von einem zentralen 400-Hz Generator oder mehreren Generatoren dem Flugzeug über ein Kabel 14 zugeführt, gelches am Gate entlangläuft und mit Kabelaufhängevorrichtungen 16 in Schienen 18 geführt ist, um Längenunterschiede beim Ein- und Ausfahren des Gates auszugleichen, welches zgischen dem ortsfesten Rotundenkopf und dem Brückenkopf teleskopartig ineinanderschiebbar ist, um das Heranfahren des Brückenkopfes an jedes gelandete Flugzeug zu ermöglichen. Dieses Zuführungskabel 14 ist bis zu einem Anschlußkasten 20 unterhalb des Brückenkopfes 12 geführt und es besteht die Forderung, daß dieses kabel 14 über den Anschlußkasten 20 ohne Steckverbindung oder Schleifringe bis zu dem Steckanschluß für das Flugzeug geführt gerden kann. Zwischen dem Anschlußkasten und dem flugzeugeigenen Versorgungssteckeranschluß muß ein Anschlußkabel vorgesehen gerden, gelches je nach Flugzeugtyp bis auf eine Länge von ca. 18 m ausgefahren werden muß. Dieses mit dem Zuführungskabel 14 fest verbundene Anschlußkabel hat einen Durchmesser von etwa 46 mm und weist vier Adern zur Versorgung sowie weitere 20 bis 30 Steuerleitungen auf, und es hat zwar eine gewisse Flexibilität, die ein Aufrollen auf einer Trommel ermöglicht, jedoch müssen dabei Verdrillungen und zu enge Krümmungsradien im Kabel verhindert werden.

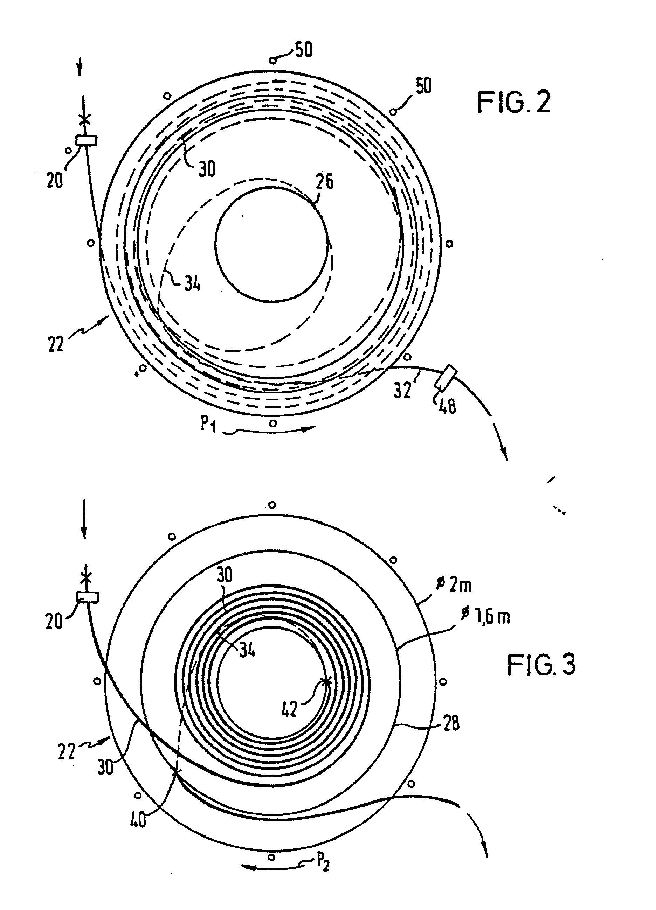

Das Anschlußkabel zwischen Anschlußkasten 20 und Flugzeug soll bei Nichtgebrauch raumsparend verstaut werden. Gemäß der Erfindung geschieht dies durch eine Kabelaufwickelvorrichtung 22, die witterungsgeschützt unter dem Brückenkopf 12 des Gates angeordnet ist und aus einer Doppeltrommel besteht, die um eine vertikale Achse 24 durch einen Kraftantrieb in beiden Richtungen drehbar ist. Diese Kabelaufwickelvorrichtung kann auch an einer Stelle am Rande des Flugfeldes aufgebaut werden, wo die Flugzeuge nach der Landung abgestellt werden. Die Doppeltrommel 22 geist eine obere Ausgleichstrommel 26 und eine hiermit fest verbundene untere Aufwickeltrommel 28 auf. Auf die Ausgleichstrommel ist der Ausgleichsabschnitt 30 des Anschlußkabels in einer Lage aufgewickelt und auf der Aufwickeltrommel 28 ist der Aufgickelabschnitt des Anschlußkabels aufgerollt, dessen abwickelbare Länge etga 18 m beträgt. Von der Ausgleichstrommel ist das Kabel in einem Bogenabschnitt 34 (Figur 2 und 3) nach der Aufwickeltrommel geführt.

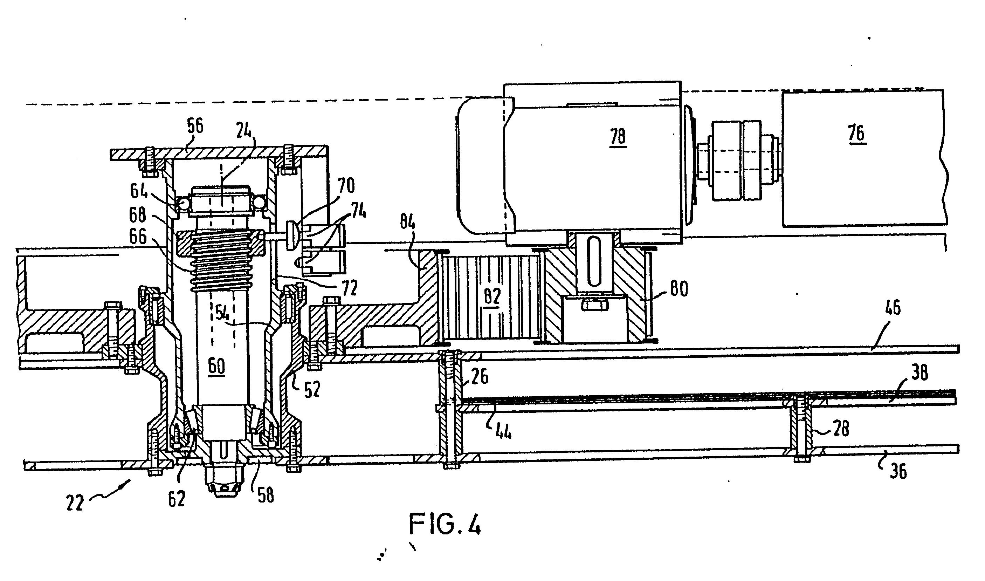

Wie aus Figur 2 ersichtlich, ist der Aufgickelabschnitt 32 des Anschlußkabels in Form einer einlagigen Spirale auf der Aufwickeltrommel 28 zwischen dem unteren Trommelflansch 36 und dem oberen Trommelflansch 38 (Figur 4) aufgewickelt. Der Durchmesser der Aufwickeltrommel 28 beträgt ca. 160 cm, so daß bei drei Umdrehungen etwa 18 m Kabellänge aufgespult werden können. Von einem Festpunkt 40 der Aufwickeltrommel 28 führt der Bogenabschnitt 34 nach einem Festpunkt 42 am Umfang der Ausgleichstrommel 26, deren Durchmesser der zulässigen Krümmung des Kabels entspricht. Gemäß dem dargestellten Ausführungsbeispiel beträgt der Durchmesser der Ausgleichstrommel 26 etwa 65 cm, und auf dieser Ausgleichstrommel ist spiralförmig in einer Lage ein Ausgleichskabelabschnitt mit einer Länge von ca. 12 m aufgerollt. Die einzelnen Windungen dieses Ausgleichskabelabschnitts 30 sind auf radialen Stützlagern 44 des Trägerflansches 38 radial reibungsarm verschieblich, und zwar zgischen dem Trommelflansch 38 und dem oberen Trommelflansch 46.

Die Abrollrichtung ist in Figur 2 mit dem Bezugszeichen $P_1$ bezeichnet. Aus der Stellung gemäß Figur 2 kann der Aufwickelabschnitt 32 des Anschlußkabels über das Rollenmundstück 48 so weit abgezogen werden, bis das Kabelende mit seinem Steckanschluß am Steckanschluß des Flugzeuges eingesteckt werden kann. Aus Figur 2 ist ersichtlich, daß der Kabelausgleichsabschnitt 30 bei aufgerolltem Aufgickelabschnitt am äußeren Umfang zwischen den Kabelflanschen 46 und 38 liegt, wobei Anschläge 50 am äußeren Flanschabschnitt das Auswandern des Kabelausgleichsabschnitts zwischen den Flanschen 46 und 38 nach außen verhindern. Wird nunmehr beim Abrollen des Aufwickelabschnitts 32 in Richtung des Pfeiles $P_1$ die Doppeltrommel gemäß Figur 2 im Gegenuhrzeigersinn gedreht, dann wird der Ausgleichsabschnitt 30 des Kabels radial in verbleibender Spiralform nach innen gezogen und auf dem Umfang der Aufwickeltrommel 28 in Form einer Spirale aufgespult. Der Ausgleichsabschnitt 30 muß so lang sein, daß der Aufwickelabschnitt 32 des Anschlußkabels voll von der Aufwickeltrommel 28 abspulbar ist, bevor der Ausgleichsabschnitt mit seiner gesamten Länge eng auf der Ausgleichstrommel 26 aufgespult ist. Der Ausgleichsabschnitt hat dann die aus Figur 3 ersichtliche Form, wobei die Spirale sechs Windungen aufweist.

Der Aufrollvorgang geschieht in umgekehrter Richtung und es wird zu diesem Zweck die Doppeltrommel 22 in Richtung des pfeiles $P_2$ gemäß Figur 3 gedreht. Bei dieser Drehung gemäß Figur 3 im Uhrzeigersinn wird das Kabel mit seinem Aufwickelabschnitt 32 auf der Trommel 28 aufgespult, und durch die durch die Bewegung der Ausgleichstrommel 26 bewirkten Kräfte wird der Ausgleichsabschnitt 30 des Kabels radial auf den Stützlagern 44 nach außen getragen, bis die Stellung gemäß Figur 2 erreicht ist.

Gemäß dem dargestellten Ausführungsbeispiel sind Aufwickelabschnitt und Ausgleichsabschnitt des Anschlußkabels entgegengesetztsinnig auf ihren Trommeln aufgespult. Es gäre jedoch auch möglich, die Aufspulung gleichsinnig vorzunehmen, und in diesem Fall würde beim Abwickeln des Anschlußkabels die Spirale des Ausgleichskabels von innen nach außen wandern, während beim Aufspulen eine radiale Bewegung der Spirale von außen nach innen erfolgen würde.

Wie aus Figur 4 ersichtlich, werden die Trommeln 26 und 28 von einer Nabe 52 getragen, die. um eine zentrale Lagerhülse 54 drehbar ist, welche an einer Bodenplatte 56 unter dem Brückenkopf 12 des Gates angeordnet ist. Die Nabe 52 ist von einem Deckflansch 58 abgeschlossen, der eine zentrale Spindelwelle 60 trägt, die über ein unteres Rollenlager 62 und ein oberes Kugellager 64 in der Lagerhülse 54 abgestützt ist. Auf dem Spindelgeginde 66 der Spindelgelle 60 läuft eine Spindelmutter 68. In die Spindelmutter 68 ist radial eine Kopfschraube 70 eingeschraubt, deren Schaft in einem Axialschlitz 72 der Lagerhülse 54 geführt ist. Bei Drehung der Spindel 66 wandert daher die Spindelmutter in vertikaler Richtung, und in den Endstellungen betätigt die Kopfschraube 70 den Endschalter 74.

Der Antrieb erfolgt von einem Elektromotor 76 aus über ein Schneckengetriebe 78, dessen Abtriebsritzel 80 über einen Zahnriemen 82 eine Riemenscheibe 84 antreibt, die fest mit der Doppeltrommel 22 verbunden ist. Der Antriebsmotor 78 kann auch als Getriebemotor ausgebildet sein.

Das Schneckengetriebe 78 hat ein Untersetzungsverhältnis von 63:1 und setzt die Drehzahl des Antriebsmotors auf 24 u/min herab.

Der Zahnriemenantrieb 80, 82 weist ein Untersetzungsverhältnis von 4:1 auf so daß die Doppeltrommel mit einer Geschwindigkeit von 6 u/min gedreht wird. Die Steuerung des Motors erfolgt vom Brückenkopf aus oder über Steuerleitungen von jedem beliebigen Punkt aus, insbesondere vom Kabelende aus, das den Anschlußstecker für das Flugzeug trägt. Auf diese Weise ist eine Einmannbedienung möglich.

Gemäß dem vorstehend beschriebenen Ausführungsbeispiel sind die beiden Trommeln, d.h. Aufwickeltrommel 28 und Ausgleichstrommel 26 axial versetzt zueinander angeordnet. Es ist auch möglich die Trommeln ineinander zu bauen, wobei die Ausgleichstrommel die innere Trommel wäre, und der Spiralausgleich des Ausgleichsabschnittes innerhalb des Raumes zwischen Ausgleichstrommel und Aufwickeltrommel in dem dazwischen liegenden Hohlraum erfolgen könnte.

## Patentansprüche

1. Kabelanschluß zu einer zentralen Bordnetzversorgungsanlage auf Flughäfen, bei welchem

ein Versorgungskabel (14) von der zentralen Bordnetzversorgungsanlage über einem Anschlußkasten (20) am Brückenkopf (12) eines Gates (10) bis zu einer Verstauvorrichtung geführt ist, von wo es bis zu einem flugzeugeigenen Versorgungssteckeranschluß ausziehbar ist, dadurch gekennzeichnet, daß die Verstauvorrichtung als trommelförmige Kabelaufwickelvorrichtung (22) ausgebildet ist, in welcher das Versorgungskabel verdrillungsfrei geführt ist, und

die Kabelaufwickelvorrichtung (22) mit vertikaler Achse (24) unter dem Brückenkopf (12) aufgehängt und durch einen Motor (76) in beiden Richtungen drehbar angetrieben ist

2. Vorrichtung nach Anspruch 1, dadurch gekennzeichnet, daß die als Doppeltrommel ausgebildete Kabelaufwickelvorrichtung (22) eine zentrale Spindelwelle (60) aufweist, auf deren Spindelgewinde (66) eine Spindelmutter (68) läuft, die drehfest axial verschieblich geführt ist und ein Schaltglied (70) für einen Endschalter (74) trägt.

3. Vorrichtung nach Anspruch 1, dadurch gekennzeichnet, daß am Kabelauslauf der Aufwickeltrommel (28) ein Rollenmundstück (48) angeordnet ist.

4. Vorrichtung nach Anspruch 1, dadurch gekennzeichnet, daß die Steuerung des Motors (76) über entsprechende Steuerschalter am Steckerende des Kabels bewirkt wird.

5. Vorrichtung nach Anspruch 1, dadurch gekennzeichnet, daß die Doppeltrommel (22) von einem Motor (76) über ein Untersetzungsgetriebe (78) in beiden Drehrichtungen antreibbar ist.

## Claims

1. Cable connection to a central board mains supply station at airports comprising a connection cable (14) leading from said supply station via a connection box (20) at a bridge head (12) of gate (10) to a stowing apparatus permitting the cable to be run out to a plug-type connection of an aircraft charcterized in that said stowing apparatus is designed as a drum-like cable coiling apparatus (22) in which the cable is lead without twisting and

that said cable coiling apparatus (22) is suspended beneath the bridge head (12) of a gate (10) with its axis (24) extending vertically and driven by a motor (76) rotatably both directions around said axis.

2. Apparatus according to claim 1, characterized in that said cable coiling apparatus (22) designed as double drum comprises a central spindle shaft (60) on the thread (66) of which a nut (68) moves which is fixed in rotation and guided axially displaceable and carries a switch member (70) for an end switch (74).

3. Apparatus according to claim 1, characterized in that at the cable exit from the takeup drum (28) a roller passage means (48) is placed.

4. Apparatus according to claim 1, characterized in that the control of the motor (76) is effected via corresponding control switches at the plug end of the cable.

5. Apparatus according to claim 1, characterized in that the double drum (22) is driveable by a motor (76) via a reduction gearing (78) in both directions of rotation.

## Revendications

1. Raccordement de câble à une installation centrale d'alimentation de réseau de bord sur les aéroports, dans lequel un câble d'alimentation (14) va, de l'installation centrale d'alimentation de réseau de bord, en passant par un coffret de branchement (20) situé à la tête de pont (12) d'une porte (10), jusqu'à un dispositif d'accumulation d'où il peut être tiré jusqu'à un raccordement d'alimentation à fiche propre à l'avion, caractérisé par le fait que le dispositif d'accumulation est conçu sous forme de dispositif d'enroulement de câble en forme de tambour (22) dans lequel le câble d'alimentation est guidé sans torsion et que le dispositif d'enroulement de câble (22) est suspendu avec axe vertical (24) sous la tête de pont (12) et peut être entraîné en rotation par un moteur (76) dans les deux sens.

2. Dispositif selon la revendication 1, caractérisé par le fait que le dispositif d'enroulement de câble conçu sous forme de tambour double (22) présente un arbre central de tige filetée (60) sur le filetage (66) duquel se déplace un écrou de tige filetée (68) qui est guidé de manière à pouvoir coulisser axialement en étant fixe en rotation et porte un organe de manoeuvre (70) pour un interrupteur de fin de course (74).

3. Dispositif selon la revendication I, caractérisé par le fait qu'à la sortie de câble du tambour d'enroulement (28) est disposé un embout à rouleaux (48).

4. Dispositif selon la revendication I, caractérise en ce que la commande du moteur (76) est assurée par l'intermédiaire d'interrupteurs de commande correspondants à l'extrémité de fiche du câble.

5. Dispositif selon la revendication I, caractérisé par le fait que le tambour double (22) peut être entraîné dans les deux sens de rotation par un moteur (76) par l'intermédiaire d'un train démultiplicateur (78).

# FIG. 1

FIG. 2

FIG. 3

FIG.4

0 118 025